Europäisches Patentamt

(19) European Patent Office

Office européen des brevets

(11) Publication number: **0 142 325**
**A2**

(12) **EUROPEAN PATENT APPLICATION**

(21) Application number: **84307670.4**

(22) Date of filing: **07.11.84**

(51) Int. Cl.⁴: **B 60 J 7/10**
**H 01 Q 1/32**

(30) Priority: **10.11.83 GB 8330040**

(43) Date of publication of application:
**22.05.85 Bulletin 85/21**

(84) Designated Contracting States:
**AT BE CH DE FR IT LI LU NL SE**

(71) Applicant: **PANARAMA SUNROOFS LIMITED**
**Commerce House Stuart Street**
**Luton Bedfordshire(GB)**

(72) Inventor: **Wilberg, Knut-Sigurd**
**Northfield House**
**Kingston Bagpuize Nr. Abingdon Oxon(GB)**

(74) Representative: **Prentice, Raymond Roy**
**R.R. Prentice & Co. 34 Tavistock Street**
**London WC2E 7PB(GB)**

(54) Improvements in vehicle sun roofs.

(57) A vehicle sun roof comprises a frame (2) which is adapted to be fitted to the roof of a vehicle in an aperture in said roof adapted to accommodate said frame and a closure panel (1) hingedly connected to the frame (2). The panel (1) is provided with an aerial (8) which may consist of a pattern printed or otherwise formed on the panel. The aerial (8) is connected by a lead to a connection provided on a hinge block (4), said hinge block being provided with a socket adapted to receive a plug provided on a cable leading to the aerial socket of a radio for the vehicle. The panel (1) is detachably mounted in the frame (2) and the plug and socket connection for the aerial (8) is also detachable.

EP 0 142 325 A2

FIG.1.

This invention relates to vehicle sun roofs and is particularly concerned with sun roofs which are adapted to be detachably mounted in the roofs of vehicles such as automobiles.

The invention is also concerned with aerials for vehicle radios.

It has previously been proposed to incorporate radio aerials in the windscreens of vehicles and reference is made in this connection to British Patent Specifications Nos. 1561742, 1434820 and 1384654. However, owing to the complex nature of vehicle windscreens requiring special forms of glass for safety reasons, it is very expensive to incorporate a radio aerial in the glass of a vehicle windscreen and these prior proposals have not proved to be commercially acceptable.

A different solution has been proposed in British Patent Specification No. 996787 in which a radio aerial was incorporated in a sun visor for a motor vehicle. However, this solution is only suitable for open-topped vehicles because the presence of the usual metallic roof of a conventional vehicle will mask the aerial and prevent the radio from receiving signals.

The present invention aims to provide a vehicle with a sun roof which incorporates an aerial for a radio fitted to said vehicle.

Accordingly, the invention provides a vehicle sun roof comprising a frame adapted to be fitted to the roof of a vehicle in an aperture in said roof adapted to accommodate said frame, said panel being detachably connected to the frame and pivotally mounted on said frame by means of a detachable hinge connection, wherein the panel is provided with an aerial which is adapted to be connected to a radio for the vehicle, said aerial being provided with a detachable connection leading to said radio and said detachable connection being incorporated in said hinge connection.

Preferably the aerial is printed on the closure panel by a screen printing or like process.

The invention will now be further described, by way of example, with reference to the drawings in which:-

Fig. 1 is a plan view of one embodiment of a vehicle sun roof according to the invention;

Fig. 2 is a side elevation of one of the hinge members of the sun roof shown in Fig. 1; and

Fig. 3 is a plan view of the hinge member shown in Fig. 2.

Referring to the drawings, the vehicle sun roof according to the invention comprises a closure panel 1 which is hingedly mounted on an outer frame 2. The closure panel is preferably made of a transparent or translucent material such as glass or a synthetic plastics material, e.g. a polycarbonate or polyacrylate although the panel may, if desired, be made of an opaque material.

The outer frame 2 is adapted to be fitted into an opening cut into a vehicle roof (not shown) and the frame fitting may be entirely conventional. Preferably, however, the frame takes the form of the frame described and illustrated in British Patent Specification No. 2129477A to which reference should be made for a full description of the construction of the frame.

The panel 1 is provided, adjacent one edge, with a pair of bores for the reception of respective bosses 5 on a pair of hinge blocks 4. The hinge blocks are secured to the panel 1 by means of roof fixing mounts provided with heads 3 which bear against the upper surface of the panel and with shanks which are receivable in bores in the respective bosses 5. The hinge blocks 4 are secured to the fixing mounts by means of screws whereby the panel 1 is held between the heads 3 of the fixing mounts and the hinge blocks 4.

The panel is further provided, adjacent the edge opposite to the edge at which the hinge blocks 4 are mounted, with a further pair of bores for the reception of fixing mounts 6 by means of which a latch mechanism 7 may be secured to the panel. The latch mechanism may take any suitable form and does not form part of this invention. Preferably, however, the latch mechanism takes the form of the latch mechanism described and illustrated in European Patent Specification No. 0109156A to which reference should be made for a full description of the construction and operation of the latch mechanism.

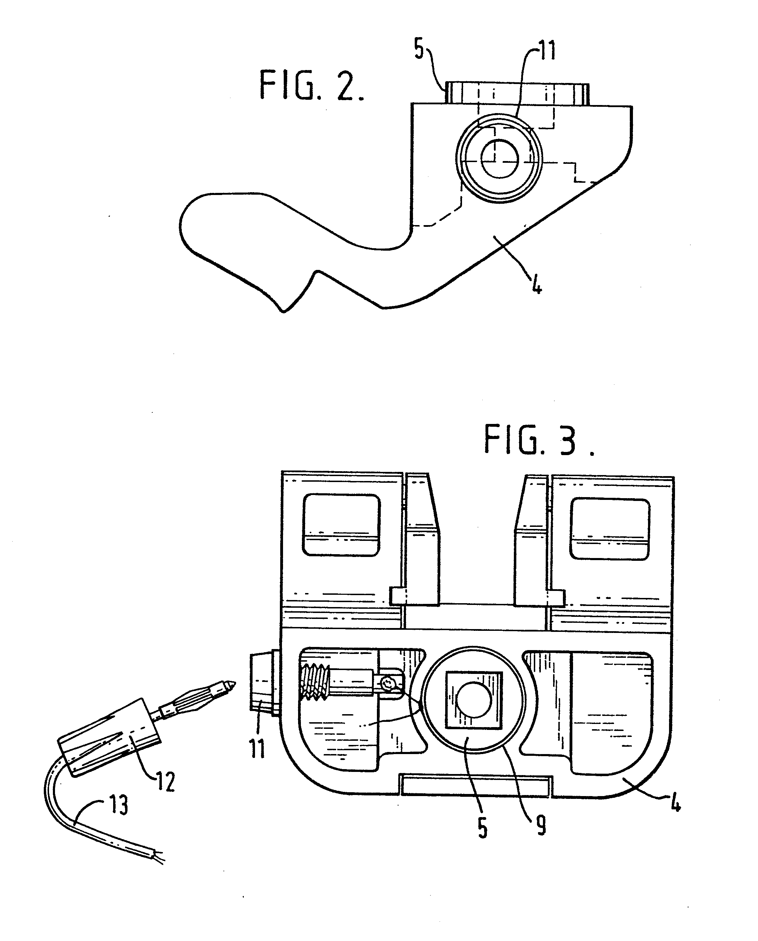

Printed on the panel 1, for example by means of a screen printing technique, is a thin wire circuit 8 which constitutes an aerial for a radio fitted to the vehicle. The circuit 8 terminates at the bosses 5 of the hinge blocks 4 and is connected to a washer 9 which is fitted round the boss of one of the hinge blocks as shown in Fig. 3. The washer 9 is connected by a lead to a socket 11 which is mounted in the hinge block 4.

As shown in Fig. 3, a plug 12 at the end of a lead 13 is insertable in the socket 11 to connect the aerial circuit 8 to the radio (not shown) of the vehicle.

The other hinge block may also be provided with a socket 11 although this is not necessary. Each of the hinge blocks may take the form of the hinge described and illustrated in British Patent Specification No. 2129048A to which reference should be made for a full description of the construction and operation of the hinge mechanism.

By using hinges of this or similar types, the panel 1 is readily detachable from the frame 2. The plug and socket connection for the aerial circuit 8 is necessary to enable the panel 1 to be readily removed. Of course, when the panel has been removed, the aerial has also been removed but it is considered that this is a very small disadvantage compared with the considerable advantage of combining a sun roof with a radio aerial thereby avoiding the extra expense of buying and fitting a separate aerial for a vehicle radio.

The hinge block 4 will normally be made of an electrically insulating material and the lead 13 will lead to the inner cable of a co-axial aerial cable (not shown) which in turn is fitted to a radio fitted in the vehicle to which the sun roof has been fitted. The outer cable of said co-axial cable should desirably be earthed to the vehicle by making an earth connection to the frame of the sun roof.

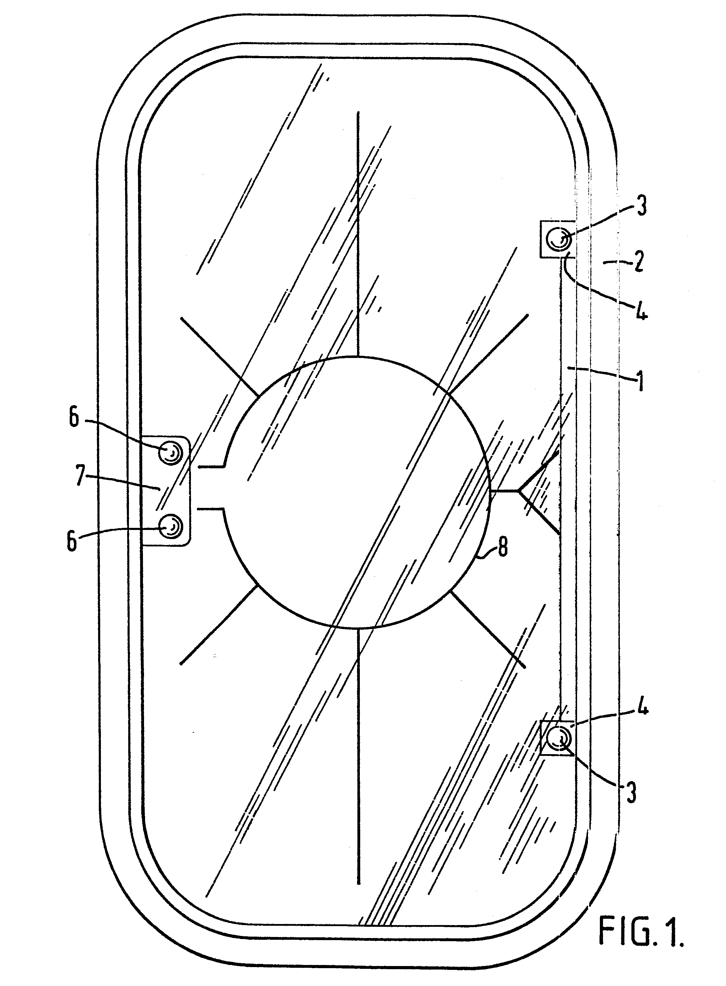

The invention is not restricted to the above-described embodiment but variations and modifications may be made without departing from the scope of the invention. For example, the aerial circuit may have other configurations which differ from the layout shown in Fig. 1 of the drawings. Further, if it is not desired to remove the panel 1 from the frame, the detachable plug/socket connection for the aerial may be replaced by a permanent connection.

It will be seen that, by means of the invention, an aerial for a vehicle radio may be provided quite cheaply which avoids the disadvantages and considerable expense of the prior proposals for vehicle radio aerials.

0142325

- 1 -

CLAIMS

1.   A vehicle sun roof comprising a frame adapted to be fitted to the roof of a vehicle in an aperture in said roof adapted to accommodate said frame and a closure panel connected to the frame, said panel being detachably connected to the frame and pivotally mounted on said frame by means of a detachable hinge connection, wherein the panel is provided with an aerial which is adapted to be connected to a radio for the vehicle, said aerial being provided with a detachable connection leading to said radio and said detachable connection being incorporated in said hinge connection.

2.   A vehicle sun roof according to claim 1, wherein the aerial is printed on the closure panel.

3.   A vehicle sun roof according to claim 2, wherein the aerial is applied to the closure panel by a process of screen printing.

4.   A vehicle sun roof according to any one of the preceding claims, wherein the aerial comprises a pattern applied to the closure panel and consisting of a ring with a plurality of radial arms extending therefrom, at least one of said arms being connected to a lead adapted to be connected to a cable leading to an aerial socket of the radio.

0142325

- 2 -

5. A vehicle sun roof according to any one of the preceding claims, wherein the panel is pivotally mounted on the frame by means of a pair of hinge blocks, at least one of said hinge blocks having a raised boss around which part of the aerial is located.

6. A vehicle sun roof according to claim 5, wherein the part of the aerial located around the boss on said hinge block is connected by a lead to a socket mounted in said hinge block.

7. A vehicle sun roof according to claim 6, wherein a plug is detachably insertable in said socket, said plug being provided on a lead adapted to be fitted to an aerial socket of the radio.

8. A vehicle sun roof according to claim 7, wherein said hinge block is made of electrically insulating material and said lead comprises a coaxial cable, the inner cable being connected to the plug and the outer cable being adapted to be earthed to the vehicle by means of an earth connection to the frame and hence to the vehicle roof.

9. A vehicle sun roof according to any one of the preceding claims, wherein the panel is made of a transparent or translucent material.

0142325

1 / 2

FIG.1.

FIG. 2.

FIG. 3.